# EUROPÄISCHE PATENTSCHRIFT

(11) **EP 1 167 001 B1**
(45) Veröffentlichungstag und Bekanntmachung des Hinweises auf die Patenterteilung: **11.05.2005**
(21) Anmeldenummer: 01113448.3
(22) Anmeldetag: 02.06.2001
(51) Int. Cl.: B29C 70/16, D04H 3/04, D04H 3/12

(54) **Verfahren zur Herstellung von Filamentfasergruppen oder -bündel aus Carbonfasern, Naturfasern od. dgl.**
Process for making webs, strips and chips having multiple filamentary carbon fibres
Procédé de fabrication de nappes, de rubans, de plaquettes comportant des fibres de carbone multiples et filamentaires

(30) Priorität: 26.06.2000 DE 10029956; 24.07.2000 DE 10035888
(43) Veröffentlichungstag der Anmeldung: 02.01.2002
(73) Patentinhaber: SAERTEX Wagener GmbH & Co. KG, 48369 Saerbeck (DE)
(72) Erfinder: Wagener, Gert, 48282 Emsdetten (DE)
(74) Vertreter: Habbel, Hans-Georg, Dipl.-Ing.

(56) Entgegenhaltungen:
- EP-A- 0 376 472
- EP-A- 0 628 401
- EP-A- 0 916 477
- EP-A- 1 134 314
- WO-A-97/04946
- FR-A- 2 594 858
- FR-A- 2 740 149
- US-A- 4 339 490
- US-A- 4 507 164
- US-A- 5 164 255

## Beschreibung

Die Erfindung bezieht sich auf ein Verfahren zur Herstellung von Filamentfasergruppen oder -bündel aus Carbonfasern, indem ein Carbonfaserroving durch einfaches oder mehrfaches Umlenken derart gespreizt wird, dass ein Band gebildet wird, die in Längsrichtung des Bandes orientierten Fasern durch ein Festlegmittel festgelegt werden und das so gebildete Tape in Längsrichtung geschnitten und die derart erzielten Strands in gewünschter Anzahl zu Rovings zusammengefasst werden.

In der Glasfaserproduktion bezeichnet man Glasfaserstränge als Rovings, wobei diese Rovings aus einer Vielzahl von Einzelfilamenten bestehen. Hierbei ist es auch bekannt, spinngeteilte bzw. assemblierte Rovings in sogenannte "Strands" zu unterteilen. Mit "Strand" wird dabei eine relativ kleine Gruppe von Einzelfilamenten bezeichnet, in die der Gesamtroving aufgeteilt ist.

Während des Spinnverfahrens wird auf die Einzelfilamente eine Schlichte aufgebracht, wobei diese Schlichte eine Kontaktvermittlung zu dem Harz erbringen soll, mit dem der Roving oder die Schnittfasern später verarbeitet werden sollen. Neben der Kontaktvermittlung hat die Schlichte oder das "sizing agent" die Aufgabe, eine Schutzglättung der Fäden durch latentes Verkleben der Einzelfilamente bzw. der Filamentgruppen - der Strands - für die Weiterverarbeitung zu erreichen.

Um sogenannte Schnittfasermatten herzustellen, wird der Roving durch Querschneiden in Stapellängen von 10 bis 100 mm geschnitten und aufgeteilt, wobei auch die Herstellung von sogenannten Filamentmatten möglich ist, in dem die Strands ohne Querschneiden weiter verarbeitet werden.

Diese durch Glasfasern mögliche Produktion ist für andere Fasern nicht möglich, da bei den anderen Fasern das Roving-Spinnverfahren fehlt.

Aus der JP 10 101 386 A ist es zur Verarbeitung von Carbonfasern bekanntgeworden, ein "seizing agent" den Carbonfasern zuzusetzen. Die Carbonfasern werden dann zu einem Tape geformt, indem sie zwischen auf 70 - 250° C erwärmte Heizrollen geführt werden. Hier wird Feuchtigkeit entfernt und ein Überschuß an Feuchtigkeit wird weiterhin an einem Trockenofen entfernt. Das so gebildete Tape wird in Stands aufgesplittet, wobei die Stands zu einem Roving geformt werden und dieses Roving-Material dann um einen Kern gewickelt wird. Das hier beschriebene "seizing agent" hat nur die Funktion einer normalen Schlichte und führt nur zu einer latenten Festlegung der einzelnen Carbonfasern aneinander bzw. im Tape. Der so gebildete Roving wird auch nicht quer geschnitten, sondern soll als Roving weiter verarbeitet werden.

Aus der US 4 507 164 ist ein Verfahren und eine Vorrichtung zur Herstellung eines Geleges bekannt, wobei dieses Gelege aus Kunststofffasern auf der Basis z. B. von Carbonfasem hergestellt wird. Hierbei wird so vorgegangen, daß zulaufende Faserbündel ausgebreitet und unidirektional im Faserverlauf liegend zu einem flächigen Band geformt werden, wobei dieses Band anschließend dem Zulauf mindestens einer Trägerbahn zugeführt wird, die ihrerseits ein Verbindungsmittel, wie Haftfäden oder Schweißfäden transportiert.

Dieses so hergestellte Gelege wird dann auf einer Aufwickelwalze gegeben, wobei Messer vorgesehen sein können, die die Bahn in Längsrichtung in entsprechende Streifen teilen. Das Herstellen einer Schnittfasermatte aus Carbonfasern wird hier nicht beschrieben.

Das Herstellen von Schnittfasermatten aus Carbonfasem ist bisher auch nicht durchgeführt worden, obgleich die Carbonfasern gegenüber den Glasfasern erhebliche Vorteile aufweisen, nämlich leichter sind und ein Mehrfaches der Festigkeit besitzen.

Im Gegensatz zu einem Tape oder Roving aus Carbonfasem lassen sich Schnittfasermatten oder Filamentendlosmatten aber in einem weiten Anwendungsbereich verarbeiten, formen und anpassen.

Der Erfindung liegt daher die Aufgabe zugrunde, ein Verfahren zur Herstellung von Filamentfasern aus Carbonfasern vorzuschlagen, durch das es möglich wird, einen aus Filamentfaserstrands bestehenden Roving herzustellen, der dann durch Querschneiden zu Schnittfasem geschnitten und diese dann zu Schnittfasermatten weiterverarbeitet werden können.

Diese der Erfindung zugrundeliegende Aufgabe wird durch die Lehre des Hauptanspruches gelöst

Die Schnittbreite in Längsrichtung beträgt 0,1 bis 5,0 mm und die so gebildeten, aus Filamentfasern aus Carbon bestehenden Stands werden zu einem Roving zusammengefaßt und dann in Faserlängen von 3 bis 500 mm quergeschnitten, so dass dadurch das Herstellen von Schnittfasermatten aus Carbonfasern möglich wird.

Die Erfindung befasst sich auch mit dem Problem Fasergruppen oder -bündel aus Naturfasern oder mineralischen Fasern herzustellen, wobei nunmehr diese Fasern zu einem Vlies aus in Längsrichtung orientierten Fasern zusammengefasst werden. Dieses Vlies kann mit einer Schlichte o. ä. leicht klebenden Substanzen zu einem Tape verfestigt, in Längsrichtung geschnitten und dadurch Filamentstrands hergestellt werden und die derart erzielten Filamentfaserstrands können in gewünschter Anzahl zu Rovings zusammengefasst werden.

Die Schnittbreite in Längsrichtung beträgt auch in diesem Fall 0,1 bis 5 mm und diese so erzielten Rovings können in Faserlängen von 3 bis 500 mm quergeschnitten werden, so dass dann auch hier die Möglichkeit besteht, Schnittfasermatten aus den erwähnten Fasern herzustellen, so daß man nicht gezwungen ist, das Vlies weiterzuverarbeiten, sondern man verlässt das Vlies und wandelt dieses Vlies in Filamentfaserstrands um.

Bei beiden Verfahrensweisen ist die Weiterverarbeitung einzelner Strands oder kleiner Gruppen dieser Strands zu sogenannten Endlosmatten ebenfalls möglich.

Die Schnittfasermatten werden durch Verkleben, Verschmelzen, Verpressen, Vernähen oder Vernadeln od. dgl. zu Flächengebilden verfestigt.

## Patentansprüche

1. Verfahren zur Herstellung von Filamentfasergruppen oder -bündel aus Carbonfasern, indem ein Carbonfaserroving durch einfaches oder mehrfaches Umlenken derart gespreizt wird, dass ein Band gebildet wird, die in Längsrichtung des Bandes orientierten Fasern durch ein Festlegmittel festgelegt werden und das so gebildete Tape in Längsrichtung geschnitten wird, wobei die derart erzielten Strands in gewünschter Anzahl zu Rovings zusammengefaßt werden und die Rovings in Faserlänge von 3 bis 500 mm quer geschnitten werden.

2. Verfahren nach Anspruch 1, **dadurch gekennzeichnet, dass** als Festlegmittel ein thermoplastischer oder duroplastischer Kunststoff eingesetzt wird.

3. Verfahren nach Anspruch 1 oder 2, **dadurch gekennzeichnet, dass** die Schnittbreite in Längsrichtung 0,1 bis 5 mm beträgt.

4. Verfahren zur Herstellung von Filamentfasergruppen oder -bündel aus Naturfasern oder mineralischen Fasern, indem aus den Fasern ein Faservlies gebildet wird, in dem die Fasern in Längsrichtung des Vlieses ausgerichtet sind, die in Längsrichtung des Vlieses orientierten Fasern durch ein Festlegungsmittel festgelegt werden und das Vlies in Längsrichtung geschnitten wird, **dadurch gekennzeichnet, dass** die derart erzielten Strands in gewünschter Anzahl zu Rovings zusammengefaßt werden und die gebildeten Rovings in Stapelfaserlängen von 3 bis 500 mm quer geschnitten werden.

5. Verfahren nach Anspruch 4, **dadurch gekennzeichnet, dass** als Festlegmittel ein thermoplastischer oder duroplastischer Kunststoff eingesetzt wird.

6. Verfahren nach Anspruch 4 oder 5, **dadurch gekennzeichnet, dass** die Schnittbreite in Längsrichtung 0,1 bis 5 mm beträgt.

## Claims

1. Process for making webs, strips and chips having multiple filamentary carbon fibres, wherein a carbon fibre roving is expanded by means of one or more direction change(s) so as to form a ribbon, the fibres orientated in the longitudinal direction of the ribbon are fixed by a fixing agent and the tape thereby formed is cut lengthwise, with desired numbers of the strands thereby obtained being combined into rovings and the rovings being cut crosswise into fibre lengths of 3 to 500 mm.

2. Process according to claim 1, **characterised in that** a thermoplastic or a thermoset is used as the fixing agent.

3. Process according to claim 1 or 2, **characterised in that** the longitudinal cut section measures 0.1 to 5 mm.

4. Process for making webs, strips and chips having multiple filamentary natural or mineral fibres, wherein the fibres are formed into a nonwoven tissue in which the fibres are orientated in the longitudinal direction of the tissue, the fibres orientated in the longitudinal direction of the tissue are fixed by a fixing agent and the tissue is cut lengthwise, **characterised in that** desired numbers of the strands thereby obtained are combined into rovings and the rovings formed are cut crosswise into staple fibre lengths of 3 to 500 mm.

5. Process according to claim 4, **characterised in that** a thermoplastic or a thermoset is used as the fixing agent.

6. Process according to claim 4 or 5, **characterised in that** the longitudinal cut section measures 0.1 to 5 mm.

## Revendications

1. Procédé pour la fabrication de groupements ou de faisceaux de fibres continues à partir de fibres de carbone, dans lequel un stratifil de fibres de carbone est étalé par un ou plusieurs retournements de manière à former une bande, les fibres orientées dans le sens longitudinal de la bande sont fixées à l'aide d'un agent de fixation et le ruban ainsi obtenu est coupé dans le sens longitudinal, les brins ainsi obtenus étant regroupés en un nombre souhaité en stratifils et les stratifils étant coupés transversalement à une longueur de fibres de 3 à 500 mm.

2. Procédé selon la revendication 1, **caractérisé en ce que** l'agent de fixation employé est un polymère thermoplastique ou thermodurcissable.

3. Procédé selon la revendication 1 ou 2, **caractérisé en ce que** la largeur de coupe dans le sens longitudinal est de 0,1 à 5 mm.

4. Procédé pour la fabrication de groupements ou de faisceaux de fibres continues à partir de fibres naturelles ou de fibres minérales, comprenant la formation d'un feutre de fibres à partir des fibres, dans lequel les fibres sont orientées dans le sens longitudinal du feutre, la fixation des fibres orientées dans le sens longitudinal du feutre par un agent de fixation et la découpe du feutre dans le sens longitudinal, **caractérisé en ce que** les brins ainsi obtenus sont regroupés en un nombre souhaité en stratifils et les stratifils formés sont découpés transversalement à une longueur de fibres de 3 à 500 mm.

5. Procédé selon la revendication 4, **caractérisé en ce que** l'agent de fixation employé est un polymère thermoplastique ou thermodurcissable.

6. Procédé selon la revendication 4 ou 5, **caractérisé en ce que** la largeur de coupe dans le sens longitudinal est de 0,1 à 5 mm.
